# EUROPÄISCHE PATENTSCHRIFT

(11) **EP 1 678 100 B1**
(45) Veröffentlichungstag und Bekanntmachung des Hinweises auf die Patenterteilung: **30.06.2010**
(21) Anmeldenummer: 05701026.6
(22) Anmeldetag: 19.01.2005
(51) Int. Cl.: C04B 35/443

(54) **GEBRANNTES FEUERFESTES KERAMISCHES ERZEUGNIS UND VERSATZ ZU SEINER HERSTELLUNG**
FIRED REFRACTORY CERAMIC PRODUCT AND A BATCH FOR THE PRODUCTION THEREOF
PRODUIT CERAMIQUE IGNIFUGE CALCINE ET MELANGE POUR LE PRODUIRE

(30) Priorität: 13.02.2004 DE 102004007062
(43) Veröffentlichungstag der Anmeldung: 12.07.2006
(73) Patentinhaber: Refractory Intellectual Property GmbH & Co. KG, 1100 Wien (AT)
(72) Erfinder: BUCHBERGER, Bernd, A-8793 Trofaiach (AT); NILICA, Roland, A-8700 Leoben (AT)
(74) Vertreter: Becker, Thomas
(86) Internationale Anmeldenummer: PCT/EP2005/000460
(87) Internationale Veröffentlichungsnummer: WO 2005/080293

(56) Entgegenhaltungen:
- EP-A- 0 122 572
- WO-A1-2006/067131
- JP-B- 48 034 809
- US-A- 2 045 494
- US-A- 3 060 040
- ZAWRAH M F M: "Effect of Cr2O3 on sinterability and properties of mullite-spinel composites" BRITISH CERAMIC TRANSACTIONS INST. MATER UK, Bd. 102, Nr. 3, Juni 2003 (2003-06), Seiten 114-118, XP008045917 ISSN: 0967-9782

## Beschreibung

Die Erfindung betrifft ein gebranntes, feuerfestes, keramisches Erzeugnis sowie einen Versatz, mit dem das Erzeugnis hergestellt werden kann. Sowohl der Versatz (die Mischung) als auch das fertige, gebrannte Erzeugnis machen von Spinellen aus MgO und Al₂O₃ Gebrauch (nachstehend MA-Spinell genannt).

In British Ceramic Transactions 2003 Vol. 102, Seiten 114-118, XP008045917, ISSN 0967-9782 wird ein Versatz mit äquimolaren Anteilen an MgO und Al₂O₃ beschrieben. Die Zugabe von MA-Spinell zu Mullit Keramiken führt danach zu guten feuerfesten Eigenschaften am fertigen Produkt.

Zahlreiche Spinelle eignen sich zur Herstellung feuerfester Erzeugnisse. Sie können synthetisch als Sinterspinell (zum Beispiel durch Sinterung in Drehrohröfen oder Schachtöfen) oder als Schmelzspinell (zum Beispiel in einem Lichtbogenofen) hergestellt werden.

Magnesiaspinellsteine bestehen mineralogisch im wesentlichen aus Periklas (MgO) und MA-Spinell (MgO- Al₂O₃) und enthalten mindestens 40 Gew.-% MgO. Der MA-Spinell kann entweder vorsynthetisiert zugegeben werden oder er bildet sich während des Brandes "in situ" aus MgO- und Al₂O₃-Zusätzen (DE 36 17 904 C2).

In der Arbeit von Cunha, 2001, XP-001503305 "Syntetic Spinel from Bauxites and Magnesias" werden Diffraktometer-Untersuchungen verschiedener Systeme gegenübergestellt.

Gebrannte Spinellerzeugnisse mit stöchiometrisch zusammengesetztem MA-Spinell zeigen meist bessere feuerfeste Eigenschaften, insbesondere eine verbesserte Resistenz gegenüber Schlacken, als Erzeugnisse mit nicht stöchiometrisch zusammengesetzem Spinell. Die auf 2 Kommastellen exakt berechneten stöchiometrischen Anteile eines MA-Spinells betragen 28,33 Gew.-% MgO und 71,67 Gew.-% Al₂O₃. Im Rahmen der Erfindung werden jedoch alle Zusammensetzungen, die von der vorgenannten, exakten stöchiometrischen Zusammensetzung um absolut plusminus 0,5 Gew.-% je Komponente abweichen, unter den Begriff "stöchiometrischer MA-Spinell" subsumiert, um den industriell technischen Möglichkeiten Rechnung zu tragen. Auch mit dieser Konvention gilt, dass es äußert schwierig ist, stöchiometrisch zusammengesetzte MA-Spinelle industriell reproduzierbar herzustellen.

Produkte mit besonders hohen Qualitätsanforderungen, die verbesserte Resistenz gegenüber aggressiven Schlacken aufweisen, werden jedoch zunehmend vom Markt verlangt. Zum Beispiel bei der Vergasung von Laugen aus der Papierindustrie in einem sogenannten black-liquor-Vergaser, werden organische Bestandteile verbrannt, während ein Gemisch aus stark alkalihaltigen Salzen im Reaktor verbleibt und auf das Feuerfestmaterial der Reaktorauskleidung einwirkt. Mit konventionellen, schmelzgegossenen Feuerfesterzeugnissen auf Basis α/β-Korund kommt es zu einem schnellen Verschleiß durch Korrosion und Volumenexpansion. Bekannte Magnesiasteine werden von der Schlacke stark infiltriert.

Aufgabe der Erfindung ist es, ein Produkt (Erzeugnis) zur Verfügung zu stellen, das industriell reproduzierbar mit guter Qualität hergestellt werden kann und eine hohe Beständigkeit auch gegenüber aggressiven Schlacken der genannten Art aufweist.

Die Erfindung umfasst in ihrer allgemeinsten Ausführungsform ein Erzeugnis mit den Merkmalen des Anspruchs 1 und einen Versatz gemäß Anspruch 4.

Dabei geht die Erfindung von folgender Überlegung aus:
Ein nicht stöchiometrisch zusammengesetzter Spinell, insbesondere ein Spinell mit einem MgO-Gehalt über dem eines stöchiometrischen Spinells, bildet die wesentliche Versatzkomponente. Dieser MA-Spinell soll während des Brandes zur Herstellung des feuerfesten Erzeugnisses in einen im wesentlichen stöchiometrisch zusammengesetzten Spinell umgewandelt werden. Dazu müssen der Mischung (dem Versatz) weitere Komponenten zugegeben werden, die mit dem überstöchiometrischen MgO-Anteil des MA-Spinells während des Brandes reagieren und damit den MgO-Anteil des Versatz-Spinells in den stöchiometrischen Bereich absenken.

Als solche weitere Komponente wird Mullit (3Al₂O₃ x 2SiO₂) vorgeschlagen.

Das Verhalten des sich aus diesen Komponenten (MgO-reicher MA-Spinell und Mullit) bildenden feuerfesten keramischen Erzeugnisses während des Brandes kann anhand des Dreistoffsystems MgO-Al₂O₃-SiO₂ diskutiert werden, das in
**Figur 1**
dargestellt ist.

Die Zusammensetzung der Mischung eines nicht stöchiometrischen, MgO-reichen Spinells und Mullit zeigt eine gedachte Linie, die zwischen der Zusammensetzung des Spinells, also zwischen MgO und MgO x Al₂O₃ und der Mullitzusammensetzung, also 3Al₂O₃ x 2SiO₂, verläuft.

Die Bedingungen während des Brandes der Mischung zum feuerfesten Erzeugnis sollen derart gesteuert werden, dass das ternäre Eutektikum bei ca. 1710 °C erreicht werden kann. Dazu ist vorgesehen, die Zusammensetzung der Mischung innerhalb des Konodendreiecks Periklas (MgO)-MA-Spinell-Forsterit (2MgO x SiO₂) zu wählen.

Beim vorgenannten Eutektikum stehen stöchiometrisch zusammengesetzter Spinell, Forsterit und Periklas miteinander im Gleichgewicht.

Das überstöchiometrisch vorhandene MgO wird als Periklas ausgeschieden.

Wesentlich für den Ablauf der Reaktion innerhalb der Mischung während des Brandes und der Sinterung der Mischungskomponenten sind hier während der Sinterung intermediär auftretende Schmelzphasen. Mit Hilfe dieser Schmelzphasen gelingt es, dichte Sintererzeugnisse zu erhalten, die über 90 % der theoretischen Reinstoffdichte des Erzeugnisses aufweisen können. Für die Feuerfestigkeit des gebrannten Erzeugnisses sind die Schmelzphasen deshalb von Bedeutung, weil sie sich während des Brandes, insbesondere während der Sinterung, zu hochschmelzenden Verbindungen umsetzen.

In unmittelbarer Umgebung eines Mullitkorns der Mischung kann sich eine Zusammensetzung ergeben, die von der durchschnittlichen Zusammensetzung des Systems abweicht. Dadurch können lokale Zusammensetzungen mit einer Schmelztemperatur unter 1710 °C auftreten, beispielsweise im Bereich des Eutektikums bei 1365 °C. Oberhalb dieser Temperatur können in diesen Bereichen Schmelzphasen auftreten. Durch Diffusionsvorgänge werden die unterschiedlichen Zusammensetzungen ausgeglichen. Die lokal von der durchschnittlichen Zusammensetzung des Systems abweichenden Zusammensetzungen verändern sich auf der gedachten Linie zwischen nicht stöchiometrischem, MgO-reichen Ausgangsspinell und Mullit in Richtung zur durchschnittlichen Zusammensetzung des Systems. Durch auftretende Flüssigphasen läuft diese Ausgleichsreaktion erleichtert ab.

Mullit kann beispielsweise als Sintermullit oder Schmelzmullit eingesetzt werden. Entscheidend ist, dass der Mullit zumindest teilweise der Mischung fertig zugegeben wird und sich höchstens teilweise während des Brandes der Mischung zum feuerfesten Erzeugnis (in situ) bildet. Der Mullitanteil in der Mischung liegt zwischen 2 und 30 Gew.-%, beispielsweise mit unteren Grenzwerten von 2 oder 3 oder 4 Gew.-% und oberen Grenzwerten von 6 oder 7 oder 10 Gew.-%.

Der Anteil des MA-Spinells mit MgO-Überschuß liegt bei 70-98 Gew.-% der Mischung, beispielsweise 80-98 Gew.-%, 85-98 Gew.-% oder 92-96 Gew.-%. Der MgO-Anteil im nicht stöchiometrischen Spinell kann beispielsweise bis 40 Gew.-% betragen, beispielsweise mit einer Untergrenze bei 29, 30, 31 oder 32 Gew.-% und einer Obergrenze zwischen 33 und 36 Gew.-%. Nachstehend wird ein industriell gefertigter nicht stöchiometrischer Spinell beispielhaft hinsichtlich seiner Zusammensetzung angegeben:

| | |
|---|---|
| MgO: | 31,9 Gew.-% |
| Al₂O₃: | 67,5 Gew.-% |
| CaO: | 0,25 Gew.-% |
| Fe₂O₃: | 0,20 Gew.-% |
| Na₂O: | 0,15 Gew.-% |
| | 100,00 Gew.-% |

Die Mischung kann Nebenbestandteile, beispielsweise Fe₂O₃, CaO, SiO₂, Na₂O oder K₂O enthalten, etwa in Form von Verunreinigungen. Keiner dieser Bestandteile sollte 2 Gew.-% überschreiten. Die Summe der Nebenbestandteile, insbesondere Oxide, beträgt < 5 Gew.-%.

Der Versatz kann neben Spinell und Mullit auch ZrO₂ oder eine ZrO₂-enthaltende Komponente umfassen. Das der Mischung beigegebene Zirkoniumdioxid wird von den innerhalb des vorgegebenen Dreistoffsystems ablaufenden Reaktionen kaum beeinflusst. Über eine Einlagerung und eine Mikrorissbildung kann es jedoch zu einer verbesserten Gefügeelastizität des gebrannten Erzeugnisses (mit ZrO₂-Zusatz) kommen. Als Zirkoniumdioxidkomponente können synthetisch gewonnenes oder natürlich vorkommendes ZrO₂ (Baddeleyit) eingesetzt werden. Der Anteil an der Gesamtmischung kann zwischen 1 und 10 Gew.-% liegen, beispielsweise mit unteren Grenzwerten bei 1, 2 oder 3 Gew.-% und oberen Grenzwerten bei 5, 6 oder 7 Gew.-%.

Ein Verfahren zur Zubereitung einer erfindungsgemäßen Mischung wird nachfolgend beispielhaft angegeben:
Zunächst wird der MgO-reiche MA-Spinell gemahlen, zum Beispiel in einer **Schwingmühle**. Nach der Mahlung kann der Spinell in folgenden Korngrößen vorliegen:

| | |
|---|---|
| d₁₀: | 0,9 µm |
| d₅₀: | 4,6 µm |
| d₉₀: | 14,1 µm. |

Bevorzugt ist in jedem Fall eine Korngröße < 50 µm, vorzugsweise < 30 µm.

Der Spinell wird anschließen mit Sintermullit vermengt und in einer **Kugelmühle** gemeinsam vermahlen. Die Anteile der Komponenten in der Mischung lassen sich wie folgt einstellen:
- nicht stöchiometrischer, MgO-reicher MA-Spinell: 93-97 Gew.-%
- Sintermullit: 3-7 Gew.-%
- Sonstige: bis 4 Gew.-%

Die Mischung wird danach mit einem Bindemittel, zum Beispiel 0,2-3 Gewichtsteilen Polyvinylalkohol auf 100 Gewichtsteile der vorgenannten Mischung, vermengt und in einem **Wirbelschichtgranulator** granuliert. Der Feuchtegehalt des Granulates (mittlerer Durchmesser ca. 1-5 mm) kann zwischen 1 und 2 Gew.-% betragen, bezogen auf die Gesamtmischung.

Die Granalien werden danach in die gewünschte Form verpresst und das gebildete Formteil getrocknet. Abschließend werden die Presskörper bei etwa 1700 °C gebrannt (gesintert), wobei die obengenannten Reaktionen ablaufen.

Unter Verwendung der vorstehend genannten Beispielmischung ergibt das gebrannte Erzeugnis die folgende Zusammensetzung:

| Komponente | Gew.-% |
|---|---|
| stöchiometrischer MA-Spinell | 94,5 |
| Periklas | 3,0 |
| Forsterit | 2,5 |

Mit einer Dichte von 3,37 g/cm³ weist das Produkt über 94 % der theoretischen Dichte von 3,58 g/cm³ auf.

Allgemein kann das gebrannte Erzeugnis einen Anteil an stöchiometrischem Spinell zwischen 70 und 98 Gew.-% mit typischen Untergrenzen zwischen 70-85 Gew.-% und typischen Obergrenzen zwischen 90-98 Gew.-% oder 90-96 Gew.-% aufweisen.

Der Anteil an Forsterit im gebrannten Erzeugnis liegt zwischen 1-15 Gew.-%, beispielsweise 1-7 Gew.-%, 1,5-4 Gew.-% oder 1-5 Gew.-%.

Der Periklasanteil im gebrannten Erzeugnis beträgt 1-15 Gew.-%, beispielsweise 1-8 Gew.-%, 3-7 Gew.-% oder 2-5 Gew.-%.

Ein etwaiger Zr02-Anteil im gebrannten Erzeugnis (aus dem Versatz oder aus Verunreinigungen im Herstellungsprozess) kann 1-10 Gew.-% betragen, beispielsweise 1-7 Gew.-% oder 2-5 Gew.-%.

CaO-Verunreinigungen (zum Beispiel aus dem verwendeten Ausgangsspinell) können zu Ca-Al-Oxiden (wie CaAl₂O₄, Kurzbezeichnung: "CA") im gebrannten Produkt führen. Weitere Ca-Al-Oxide können sein: "C₂A", "CA₂", "C₃A", "C₁₂A₇" und/oder "CA₆".

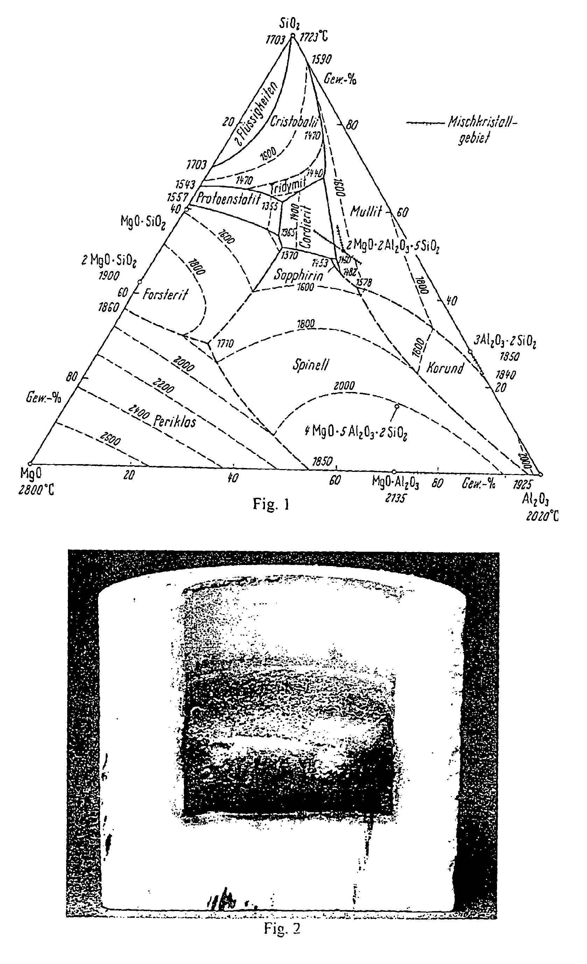

Die Überlegenheit des erfindungsgemäßen Erzeugnisses gegenüber bekannten Produkten zeigen die Figuren 2-4.

Jeweils baugleiche Tiegel wurden mit der gleichen Menge an Schlacke aus einer black-liquor Vergasungsanlage gefüllt und unter gleichen Bedingungen bei 1100 °C und 48 h-thermisch beaufschlagt.

Tiegel A (Fig. 2) besteht aus einem erfindungsgemäßen Werkstoff. Er ist weitestgehend rissfrei. Die Infiltration ist minimal. Es hat keine Formveränderung stattgefunden.

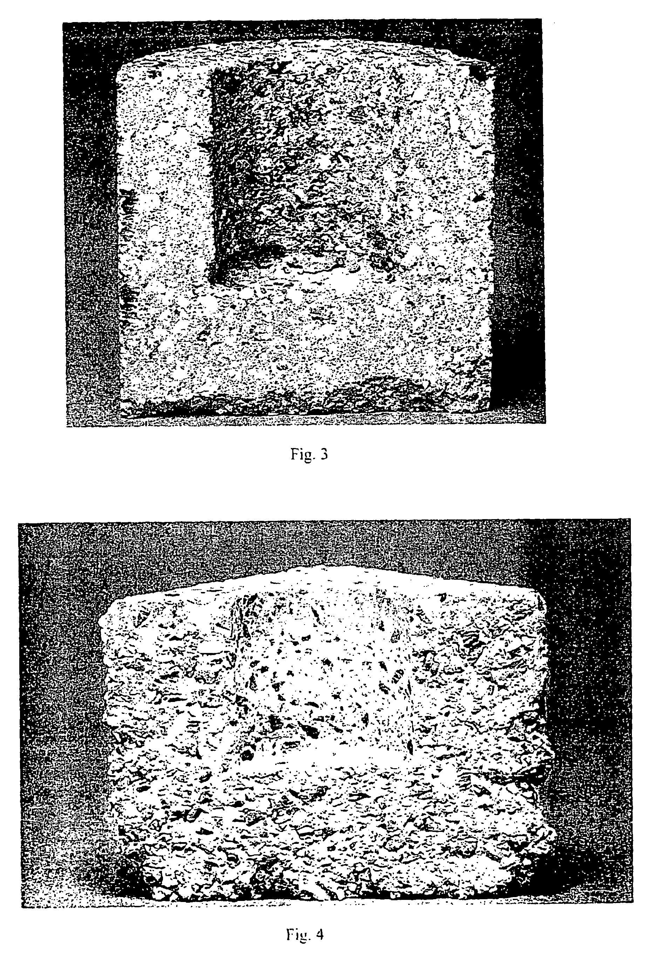

Tiegel B (Fig. 3) besteht aus einer konventionellen Korund-Mullit-Qualität. Es ist eine komplette Schlacleninfiltration in das Tiegelgefüge zu erkennen.

Der Werkstoff des Tiegels C (Fig. 4) besteht aus MgO + Spinell. Durch die Bildung von β-Korund während des Versuches ist der Tiegel quasi "aufgebläht". Die Schlacke ist vollkommen in den Tiegel infiltriert.

## Patentansprüche

1. Gebranntes feuerfestes keramisches Erzeugnis mit folgenden mineralogischen Phasen:
1.1 70-98 Gew.-% eines stöchiometrischen MgO-Al₂O₃-Spinells mit 28,33 ± 0,5 Gew.-% MgO und 71,67 ± 0,5 Gew.-% Al₂O₃ 1.2 1-15 Gew.-% Forsterit
1.3 1-15 Gew.-% Periklas
1.4 bis zu 10 Gew.-% sonstige mineralogische Phasen,
wobei die Summe 100 Gew.-% beträgt.

2. Erzeugnis nach Anspruch 1 mit folgenden mineralogischen Phasen:
2.1 70-97 Gew.-% des stöchiometrischen MgO-Al₂O₃-Spinells
2.2 1-10 Gew.-% Forsterit
2.3 1-10 Gew.-% Periklas
2.4 1-10 Gew.-% ZrO₂ und/oder mindestens einer Ca-Al-Oxidphase.

3. Erzeugnis nach Anspruch 1 mit einer Dichte > 3,35 g/cm³

4. Versatz zur Herstellung eines feuerfesten Erzeugnisses nach einem der Ansprüche 1-3, der folgende Komponenten umfasst:
4.1 70-98 Gew.-% eines nicht stöchiometrischen MgO-Al₂O₃-Spinells
4.2 2-30 Gew.-% Mullit
4.3 bis zu 10 Gew.-% Sonstige
wobei die Summe 100 Gew.-% beträgt.

5. Versatz nach Anspruch 4, bei dem der Mullit aus Sintermullit besteht.

6. Versatz nach Anspruch 4, wobei die Komponenten eine Korngröße < 50 µm aufweisen.

7. Versatz nach Anspruch 4, bei dem die Komponenten vermischt zu Granalien aufbereitet sind.

8. Versatz nach Anspruch 4, mit einem Anteil von 1 bis 10 Gew.-% ZrO₂ oder einer ZrO₂haltigen Komponente.

9. Versatz nach Anspruch 4, wobei der nicht stöchiometrische MgO-Al₂O₃-Spinell folgende Zusammensetzungen aufweist:
| | |
|---|---|
| Al₂O₃: | 58-70 Gew.-% |
| MgO: | 28-40 Gew.-% |
| Nebenbestandteile: | < 5 Gew.-% |
wobei die Summe 100 Gew.-% beträgt.

## Claims

1. A burnt refractory ceramic product with the following mineralogical phases:
1.1 70-98% by weight of a stoichiometric MgO-Al₂O₃ spinel of 28,33 ± 0,5 % by weight MgO and 71,67 ± 0,5 % by weight Al₂O₃,
1.2 1-15% by weight of forsterite
1.3 1-15% by weight of periclase
1.4 Up to 10% by weight of other mineralogical phases,
wherein the total is 100% by weight.

2. The product according to Claim 1, with the following mineralogical phases:
2.1 70-97% by weight of the stoichiometric MgO-Al₂O₃ spinel
2.2 1-10% by weight of forsterite
2.3 1-10% by weight of periclase
2.4 1-10% by weight of ZrO₂ and/or at least one Ca-Al oxide phase

3. The product according to Claim 1, with a density > 3.35 g/cm³.

4. A batch for manufacturing a refractory product according to any one of Claims 1-3, which comprises the following components:
4.1 70-98% by weight of a non-stoichiometric MgO-Al₂O₃ spinel
4.2 2-30% by weight of mullite
4.3 Up to 10% by weight of other,
wherein the total is 100% by weight.

5. The batch according to Claim 4, in which the mullite consists of sinter mullite.

6. The batch according to Claim 4, wherein the components have a grain size < 50 µm.

7. The batch according to Claim 4, in which the components are prepared by mixing to granules.

8. The batch according to Claim 4, with a proportion of up to 10% by weight of ZrO₂ or a component containing ZrO₂.

9. The batch according to Claim 4, wherein the non-stoichiometric MgO-Al₂O₃ spinel has the following compositions:
| | |
|---|---|
| Al₂O₃: | 58-70% by weight |
| MgO: | 29-40% by weight |
| secondary constituents: | < 5% by weight |
wherein the total is 100% by weight.

## Revendications

1. Produit réfractaire en céramique cuite, ayant les phases minéralogiques suivantes:
1.1 70 à 98 % en poids d'un spinelle MgO-Al₂O₃ stoechiométrique avec 28,33 ± 0,5 % en poids de MgO et 71,67 ± 0,5 % en poids de Al₂O₃
1.2 1 à 15 % en poids de forsterite
1.3 1 à 15 % en poids de périclase
1.4 jusqu'à 10 % en poids d'autres phases minéralogiques,
la somme étant de 100 % en poids.

2. Produit selon la revendication 1, ayant les phases minéralogiques suivantes:
2.1 70 à 97 % en poids dudit spinelle MgO-Al₂O₃ stoechiométrique
2.2 1 à 10 % en poids de forsterite
2.3 1 à 10 % en poids de périclase
2.4 1 à 10 % en poids de ZrO₂ et/ou d'au moins une phase d'oxydes de Ca-Al.

3. Produit selon la revendication 1, ayant une densité > 3,35 g/cm³.

4. Mélange destiné à la fabrication d'un produit réfractaire selon l'une des revendications 1 à 3, comprenant les composants suivants:
4.1 70 à 98 % en poids d'un spinelle MgO-Al₂O₃ non-stoechiométrique
4.2 2 à 30 % en poids de mullite
4.3 jusqu'à 10 % en poids d'autres composants
la somme étant de 100 % en poids.

5. Mélange selon la revendication 4, ladite mullite étant constituée de mullite frittée.

6. Mélange selon la revendication 4, lesdits composants présentant une granulométrie < 50 µm.

7. Mélange selon la revendication 4, lesdits composants étant mélangés de façon à former des granules.

8. Mélange selon la revendication 4, la proportion de ZrO₂ ou d'un composant contenant du ZrO₂ étant comprise entre 1 et 10 % en poids.

9. Mélange selon la revendication 4, ledit spinelle MgO-Al₂O₃ non-stoechiométrique ayant la composition suivants :
| | |
|---|---|
| Al₂O₃: | 58 à 70 % en poids |
| MgO: | 28 à 40 % en poids |
| Composants minoritaires: | < 5 % en poids |
la somme étant de 100 % en poids.
